# EUROPÄISCHE PATENTANMELDUNG

(11) **EP 0 657 312 A1**
(43) Veröffentlichungstag der Anmeldung: **14.06.1995**
(21) Anmeldenummer: 94118735.3
(22) Anmeldetag: 29.11.1994
(51) Int. Cl.: B60C 23/00

(54) **Druckausgleichseinrichtung und Verfahren zu ihrer Herstellung**

(30) Priorität: 08.12.1993 DE 4341789
(71) Anmelder: Crom, Hans-Georg, D-47608 Geldern (DE)
(72) Erfinder: Crom, Hans-Georg, D-47608 Geldern (DE)
(74) Vertreter: Schoenen, Norbert

(57) **Zusammenfassung**

Die Einrichtung zum Überwachen und Ausgleichen des Drucks in mehreren Druckräumen hat ein Gehäuse (1), eine Druckkammer (29), die mit einer der Anzahl der Druckräume entsprechenden Anzahl von Auslässen (3) verbunden ist, und mindestens ein zwischen den Auslässen (3) und der Druckkammer (29) angeordnetes und vom in den Druckräumen herrschenden Druck betätigbares Ventil (4,12). Vor jedem Auslaß (3) ist ein solches Ventil (4,12) angeordnet ist, dessen Verschlußteil (4) bei einem Druckabfall in dem jeweiligen Druckraum gegenüber dem Druck in der Druckkammer (29) öffnet. Zusätzlich ist mindestens ein Kanal zwischen jedem Auslaß (3) und der Druckkammer (29) vorgesehen, wobei die Querschnittsfläche des Kanals bzw. der Kanäle so bemessen ist, daß bei geschlossenem Ventil (4,12) der Druckausgleich über den Kanal mindestens 10 mal langsamer als durch das geöffnete Ventil (4,12) erfolgt. Die Einrichtung ist einfach, wenig aufwendig, robust und leicht zu montieren und zu entfernen. Sie ermöglicht einen Druckausgleich zwischen den Reifen eines aus mehreren Reifen bestehenden Radsatzes, eine schnelle und einfache Überprüfung des Druckzustandes der inneren Reifen ohne zusätzliche Anzeigevorrichtungen und verhindert gleichzeitig bei einem Zerreißen eines Reifens einen schnellen Druckverlust in den anderen Reifen.

Zur Veröffentlichung mit der Zusammenfassung wird Figur 3 vorgeschlagen.

## Beschreibung

Die Erfindung bezieht sich auf eine Einrichtung zum Überwachen und Ausgleichen des Drucks in mehreren Druckräumen, insbesondere in den Luftreifen eines aus mehreren Reifen bestehenden Radsatzes von Landfahrzeugen, mit einem Gehäuse, einer Druckkammer, die mit einer der Anzahl der Druckräume entsprechenden Anzahl von Auslässen verbunden ist, und mindestens einem zwischen den Auslässen und der Druckkammer angeordneten und vom in den Druckräumen herrschenden Druck betätigbaren Ventil.

Wichtig bei Radsätzen mit Mehrfachluftreifen von Fahrzeugen, z. B. Zwillingsreifen bei Lastkraftwagen und anderen Kraftfahrzeugen, ist die Überwachung und Aufrechterhaltung des vorgeschriebenen und vor allem eines gleichmäßigen Luftdrucks in jedem Einzelreifen. Das gleiche gilt für Baustellenfahrzeuge, deren Reifen mit Luft oder einer Flüssigkeit unter einem üblicherweise relativ niedrigen Druck gefüllt sind. Üblicherweise überprüfen die Fahrer die Reifen regelmäßig, z. B. bei Zwischenstops, durch Abklopfen und Sichtkontrolle, da bei den in der Regel schlecht zugänglichen Reifenventilen ein Nachmessen des Reifendrucks zu zeitaufwendig und nur unter Schwierigkeiten durchzuführen ist. Diese Methode reicht in der Praxis aus.

Ein Problem stellen jedoch die inneren Reifen der Radsätze dar. Der Begriff "innerer Reifen" wird in dieser Anmeldung für alle von außen nicht direkt sichtbaren Reifen eines Radsatzes verwandt. So hat ein Radsatz mit Drillingsreifen einen äußeren und zwei innere Reifen. Infolge der schlechten Zugänglichkeit und Sichtbarkeit der inneren Reifen bleibt hier ein allmählicher Druckverlust häufig über längere Zeit unbemerkt. Die äußeren Reifen werden in einem solchen Fall durch erhöhte Belastung und der defekte innere Reifen durch verstärkte Walkarbeit überbeansprucht. Ein erhöhter Verschleiß sowohl der äußeren als auch der inneren Reifen und sogar Reifenplatzer, insbesondere der inneren Reifen, können die Folge sein.

Zur Lösung dieses Problems sind Druckausgleichs- und auch Überwachungseinrichtungen im Stand der Technik bekannt. So wird nach der DE 32 12 852 A1 der Reifendruck bei einem Druckabfall automatisch nachgeregelt. Bei einem Platzen eines Reifens oder einer größeren Undichtigkeit wird ein automatischer Bremsvorgang eingeleitet. Nachteilig ist jedoch die relativ komplizierte Regeleinrichtung, deren Montage außerdem wegen der vom Regler zu jedem Radsatz führenden Leitungen mit drehbaren Durchführungen aufwendig ist.

Eine weitere, ebenfalls aufwendige Einrichtung zum Ausgleichen und Überwachen des Drucks in der Luftbereifung eines Fahrzeugs wird in der EP 0 003 722 A1 beschrieben. Ein Druckausgleich zwischen den Reifen erfolgt jedoch nur bis zu einem fest eingestellten, nicht veränderbaren Mindestdruck, da bei dessen Unterschreiten der Druckausgleichskanal über ein Ventil geschlossen wird. Ein langsames Entweichen des Drucks aus dem inneren Reifen eines Radsatzes ist nicht ohne weiteres von außen erkennbar, denn nach dem Unterschreiten des Mindestdrucks im inneren Reifen bleibt der Druck im äußeren Reifen konstant, auch wenn der Druck im inneren Reifen weiter absinkt. Daher ist hier eine Anzeige für den Fall erforderlich, daß das Ventil den Druckausgleichskanal schließt.

Eine andere Druckregelvorrichtung für Fahrzeugreifen arbeitet mit einer zwei Kugelventile betätigenden, einstellbaren Regelstange (EP 0 038 978 A2). Bei einem stärkeren, fest vorgegebenem Druckabfall in diesem Reifen wird der Druckausgleich mit den unbeschädigten Reifen unterbrochen. Ohne eine zusätzliche Anzeigeeinrichtung läßt sich daher ein langsamer, allmählicher Druckabfall in einem inneren Reifen des Radsatzes nicht ohne weiteres von außen erkennen. Auf ähnliche Weise wirkt die in der EP 0 429 073 A3 dargestellte Druckausgleichseinrichtung. Sie weist den gleichen Nachteil auf.

Der Erfindung liegt daher die Aufgabe zugrunde, eine einfache, wenig aufwendige, robuste und leicht zu montierende und zu entfernende Einrichtung der eingangs genannten Art zu entwickeln, die einen Druckausgleich zwischen den Reifen eines aus mehreren Reifen bestehenden Radsatzes, eine schnelle und einfache Überprüfung des Druckzustandes der inneren Reifen ohne zusätzliche Anzeigevorrichtungen ermöglicht und gleichzeitig bei einem Zerreißen eines Reifens einen schnellen Druckverlust in den anderen Reifen verhindert.

Diese Aufgabe wird erfindungsgemäß dadurch gelöst, daß vor jedem Auslaß ein Ventil angeordnet ist, dessen Verschlußteil bei einem Druckabfall in dem jeweiligen Druckraum gegenüber dem Druck in der Druckkammer öffnet, und zusätzlich mindestens ein Kanal zwischen jedem Auslaß und der Druckkammer vorgesehen ist, wobei die Querschnittsfläche des Kanals bzw. der Kanäle so bemessen ist, daß bei geschlossenem Ventil der Druckausgleich über den Kanal mindestens 10 mal, insbesondere mindestens 50 mal, langsamer als durch das geöffnete Ventil erfolgt.

Im Normalbetrieb findet ständig ein Druckausgleich zwischen den Reifen eines Radsatzes statt. Ein kleinerer Reifendefekt bei den inneren Reifen eines Radsatzes wird auf diese Weise durch den Druckverlust und damit die Verformung des äußeren Reifens sofort sichtbar. Bei einem stärkeren Druckabfall infolge eines Reifenplatzers verliert der äußere Reifen des Radsatzes ebenfalls Luft, aber so langsam, daß keine gefährlichen Situation entstehen kann und der Fahrer ausreichend Zeit findet, das Fahrzeug sicher abzustellen.

Ein zusätzlicher Vorteil wird durch die Möglichkeit einer zentralen und damit schnellen sowie gleichmäßigen Befüllung der Reifen des Radsatzes erreicht, wenn die Einrichtung einen absperrbaren, mit der Druckkammer verbundenen Einlaß für das Druckmedium, insbesondere Druckluft hat. Vorzugsweise weist der absperrbare Einlaß ein Rückschlagventil auf. Dabei kann es sich um ein handelsübliches Reifenbefüllventil handeln. Aber auch andere Absperrmöglichkeiten für den Einlaß sind möglich und liegen im Rahmen der Erfindung.

Ein weiterer Vorteil der erfindungsgemäßen Einrichtung liegt auch in dem Druckausgleich zwischen dem äußeren und dem oder den inneren Reifen, wenn der äußere Reifen allmählich Druck verliert. Eine gleichmäßige Flächenbelastung aller Reifen eines Radsatzes wird auf diese Weise sichergestellt.

Der für den langsamen Druckausgleich vorgesehene Kanal wird vorteilhaft zwischen der Ventilsitzfläche und dem an dieser Fläche anliegenden Verschlußteil gebildet. Ein zusätzlicher Aufwand zur Herstellung einer separaten Leitung ist nicht erforderlich.

In einer besonders preiswerten Ausführung ist das Ventil als eine auf einer ebenen Schulter aufliegenden Membran ausgebildet, wobei die Schulter eine geringfügige Erhebung oder Vertiefung hat, so daß der Druckausgleich auch bei geschlossenem Ventil stattfinden kann.

In einer ebenfalls mit nur geringem Aufwand herzustellenden und zusätzlich besonders leicht montierbaren sowie robusten Ausgestaltung der Erfindung ist das Ventil ein, insbesondere federbelastetes, Kugelventil und hat eine von der konischen Form geringfügig abweichende und damit den Kanal bzw. die Kanäle bildende Ventilsitzfläche. Die Feder sorgt für einen besonders sicheren und verschleißfesten Sitz auch bei schnellen Drehbewegungen des Radsatzes.

In einer besonders vorteilhaften Ausgestaltung der Erfindung wird vorgeschlagen, daß die Druckkammer einen füllseitigen Druckraum für den Innenreifen und einen füllseitigen Druckraum für den Außenreifen aufweist und daß ein Zylinder mit einem Kolben vorgesehen ist, der den füllseitigen Druckraum für den Innenreifen vom füllseitigen Druckraum für den Außenreifen bei einem vorgegebenen Druckverlust im Innenreifen und/oder Außenreifen absperrt.

Bei einem Druckverlust in einem der Zwillingsreifen findet in diesem Fall zunächst ein langsamer Druckausgleich wie vorstehend beschrieben statt, bis der Druck in den Reifen auf einen bestimmten Bruchteil des Solldrucks abgefallen ist. In diesem Stadium läßt sich der Druckverlust im Innenreifen durch den Druckverlust im Außenreifen auf die beschriebene Weise leicht feststellen, aber der Druck reicht noch für eine sichere Weiterfahrt aus. Wird der Mindestdruck unterschritten, dann bewegt sich der Kolben in seine Absperrstellung und die füllseitigen Druckräume und damit die Innenräume der Zwillingsreifen werden voneinander getrennt, so daß der noch unbeschädigte Reifen keine weitere Luft verliert.

In einer bevorzugten Ausgestaltung der Erfindung wird die Trennung der beiden Druckräume selbsttätig und sicher dadurch erreicht, daß die füllseitigen Druckräume, insbesondere über ein im Kolben angeordnetes weiteres Ventil, mit einem Vergleichsdruckraum verbunden sind, wenn der Druck im Einlaß größer als im Vergleichsdruckraum ist, und daß die eine Fläche des Kolbens vom Druck in dem füllseitigen Druckräumen und die andere Fläche des Kolbens vom Druck im Vergleichsdruckraum beaufschlagt wird. Beim Befüllen der Zwillingsreifen öffnet das im Kolben angeordnete Ventil, so daß die füllseitigen Druckräume und der Vergleichsdruckraum miteinander verbunden sind, und es stellt sich im Vergleichsdruckraum der gleiche Druck, der Solldruck, wie in den Reifen ein. Fällt der Druck in einem der Reifen und damit auch in den füllseitigen Druckräumen auf einen bestimmten Bruchteil des Solldrucks, der durch das Hubvolumen des Kolbens auf der Seite des Vergleichsdruckraums vorgegeben ist und durch eine einfache Vergrößerung des Vergleichsdruckraums verändert werden kann, so bewegt sich der Kolben infolge der auf ihn wirkenden Druckdifferenz und unterbricht die Verbindung zwischen den Zwillingsreifen. Diese Verbindung wird also nicht wie im Stand der Technik beim Erreichen eines fest vorgegebenen Mindestdrucks, sondern beim Erreichen eines vom Solldruck abhängigen Mindestdrucks unterbrochen.

Vor dem Befüllen der Reifen ist es notwendig, den Vergleichsdruckraum zu entlüften. Eine selbsttätige Entlüftung wird in einer weiteren vorteilhaften Ausgestaltung der Erfindung vorgeschlagen. Dazu ist das weitere Ventil als Rückschlagventil ausgebildet, und es hat eine derartige Schließkraft, daß es bei einem bestimmten Druckabfall in den füllseitigen Druckräumen gegenüber dem Vergleichsdruckraum öffnet, wobei der genannte Druckabfall wesentlich höher als der zum Bewegen des Kolbens erforderliche Druckabfall ist. Beim vollständigen Entlüften der füllseitigen Druckräume wird damit gleichzeitig der Vergleichsdruckraum entlüftet.

Zusätzlich kann die Stellung des Kolbens auch zur Anzeige des Betriebszustands der Zwillingsreifen dienen. Dazu wird ein vom Kolben in seiner Absperrstellung betätigbarer Schalter für ein Anzeigeelement, z. B. eine Leuchtdiode, vorgeschlagen.

Zur Kontrolle der Höhe des Reifendrucks wird ferner vorgeschlagen, daß der absperrbare Einlaß ein Außengewinde für den Anschluß an ein Druckanzeigegerät oder für eine den Druck anzeigende Staubkappe aufweist. Die Anzeige läßt sich leicht ablesen, da die erfindungsgemäße Einrichtung an der Felge des äußeren Reifens montiert werden kann. Die Druckanzeige kann in der Mitte der Radnabe und damit vor Verschmutzung geschützt, z. B. in der Staubkappe des Einlaßventils angebracht sein.

Die Erfindung betrifft ferner eine besonders wirtschaftliche Herstellung der Einrichtung, bei der der Kanal zwischen der Ventilsitzfläche und dem an dieser Fläche anliegenden Verschlußteil gebildet wird und die Ventilsitzfläche mindestens eine zusätzliche Erhebung und/oder Vertiefung aufweist. Praktisch ohne einen zusätzlichen Aufwand läßt sich dieser Kanal einformen, wenn man sowohl die Ventilsitzfläche als auch die darin vorgesehenen Erhebungen bzw. Vertiefungen in einem Arbeitsgang durch Eindrücken eines entsprechenden Formwerkzeugs in eine Stufenbohrung im Gehäuse herstellt.

Im folgenden werden zwei Ausführungsbeispiele der Erfindung anhand von Zeichnungen näher erläutert. Es zeigen
- Figur 1: einen Längsschnitt durch eine Schnellbefüllungs- und Druckausgleichseinrichtung für Zwillingsreifen entsprechend einem ersten Ausführungsbeispiel der Erfindung,
- Figur 2: eine schematische Darstellung der Form der Ventilsitzfläche bei der Einrichtung nach Figur 1 und
- Figur 3: einen Längsschnitt durch eine Schnellbefüllungs- und Druckausgleichseinrichtung für Zwillingsreifen entsprechend einem zweiten Ausführungsbeispiel der Erfindung.

Im Gehäuse 1 ist eine abgestufte Durchgangsbohrung zur Aufnahme zweier Kugelventile und ein mit dieser Bohrung in Verbindung stehendes Sackloch eingebracht, in dem ein übliches, hier der Einfachheit halber nur schematisch dargestelltes Reifenbefüllventil 2 eingelötet ist. Dieser Einlaß 2 trägt ein Außengewinde 15 für den Anschluß an ein Druckanzeigegerät oder für eine den Druck anzeigende Staubkappe.

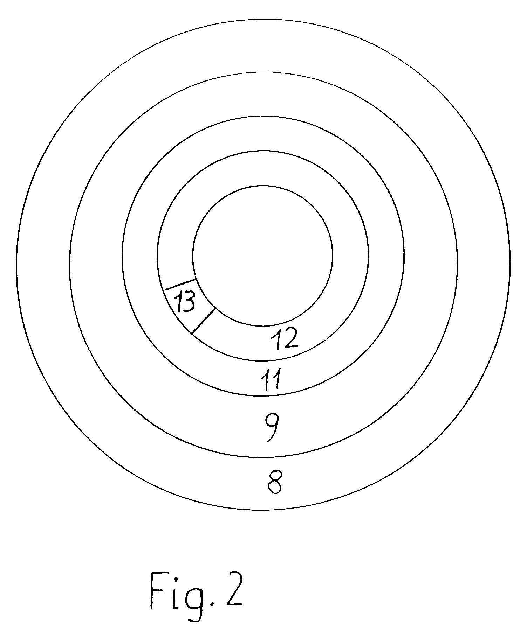

An der innersten Schulter jedes Auslasses 3 ist eine in Figur 2 näher dargestellte Ventilsitzfläche eingeformt, an der eine Ventilkugel 4 bei geschlossenem Ventil anliegt. Die Kugeln 4 werden durch jeweils eine Druckfeder 5 in ihrer Lage gehalten, die sich ihrerseits über eine Hülse 6 an einer Ringdichtung 7 abstützt. Die Auslässe 3 tragen ein Gewinde 8 zum Anschluß an übliche Ventilverlängerungsschläuche für Fahrzeugreifen oder für sonstige Anschlußmöglichkeiten, z. B. Schnellkupplungen.

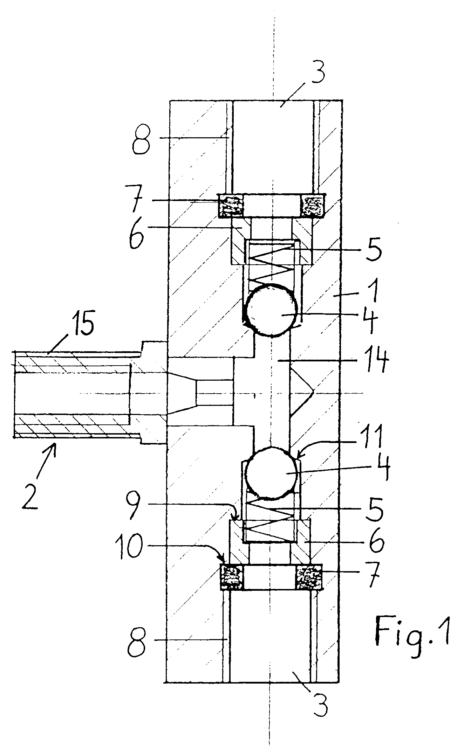

Figur 2 zeigt im Ausschnitt eine Ansicht auf einen Auslaß 3 ohne Kugel 4, Feder 5, Hülse 6 und Ringdichtung 7. Dargestellt sind die Schultern 9 und 10 der Stufenbohrung, an der die Hülse 6 bzw. die Ringdichtung 7 anliegt. An die innerste Schulter 11 ist eine konische Ventilsitzfläche 12 eingeformt, die eine ebene, ungefähr trapezförmige Erhebung 13 zeigt. Infolgedessen liegt die Kugel 4 auch bei geschlossenem Ventil nicht an der gesamten Sitzfläche 12 dicht an. Zwischen der Kugel 4 und der Sitzfläche 12 befindet sich beiderseits der Erhebung 13 ein schmaler Spalt, der einen langsamen Druckausgleich zwischen der in Figur 1 gezeigten Druckkammer 14 und dem jeweiligen Auslaß 3 auch bei geschlossenem Ventil ermöglicht.

Zur Herstellung der konischen Sitzfläche 12 mit der trapezförmigen Erhebung 13 wird ein Stift mit einer konischen Spitze in die innerste Schulter der Stufenbohrungen eingedrückt und formt so die konische Sitzfläche 12. Ein Teil der konischen Spitze des Stiftes ist abgetragen, so daß der Konus eine plane, dreieckige Fläche hat. Die Fläche entspricht der ebenen Erhebung 13 an der Ventilsitzfläche 12. Auf diese sehr wirtschaftliche Weise läßt sich eine Ventilsitzfläche mit einer genau definierten Unregelmäßigkeit herstellen.

Bei der Montage wird wie folgt vorgegangen. Die Schnellbefüllungs- und Druckausgleichseinrichtung wird mittels handelsüblicher, in den Zeichnungen nicht dargestellter Ventilverlängerungsschläuche mit den Fahrzeugventilen eines Reifenpaares verbunden. Die Abdichtung der Einschraubteile erfolgt über die Ringdichtung 7. Die bereits vorhandenen Fahrzeugventile verbleiben an den Reifen und werden durch Bauteile innerhalb der Anschlüsse der Verlängerungsschläuche geöffnet. Die Reifenpaare werden nun über das Ventil 2 befüllt. Die Luft strömt in die Druckkammer 14, die auch als Ausgleichsbohrung bezeichnet wird, öffnet die beiden federbelasteten Kugelventile und füllt gleichmäßig das Reifenpaar. Eine möglichst zentrale Anordnung des Ventils 2 erleichtert wesentlich den Füll- und Überwachungsvorgang. Zusätzlich ist eine druckanzeigende Verschlußkappe für das mit einem handelsüblichen Ventilgewinde versehene Ventil 2 vorteilhaft.

Ein unterschiedlicher Druck innerhalb des Reifenpaares wird über die beiden Kugelrückschlagventile ausgeglichen. Dabei strömt Luft aus dem Reifen mit höheren Druck in den Reifen mit niedrigerem Druck. Möglich wird diese Strömung durch die bereits oben beschriebene besondere Form der Ventilsitzflächen. Da die Durchflußrate relativ gering ist, dauert es auch beim Zerreißen eines der Reifen eine längere Zeit, z. B. bei einem typischen Lkw-Reifen mindestens etwa 15 Minuten, bis der Luftdruck im unbeschädigten Reifen auf einen gefährlich niedrigen Wert abgesunken ist. Für kurze Zeit kann noch gefahrlos weitergefahren werden.

Entweicht die Luft nur langsam aus einem der Reifen, so wird der Druck kontinuierlich ausgeglichen, so daß alle Reifen im Fahrbetrieb gleichmäßig belastet werden. Der Fahrer entdeckt bei seiner regelmäßigen Sichtkontrolle ohne weiteres das unter zu niedrigem Druck stehendes Reifenpaar.

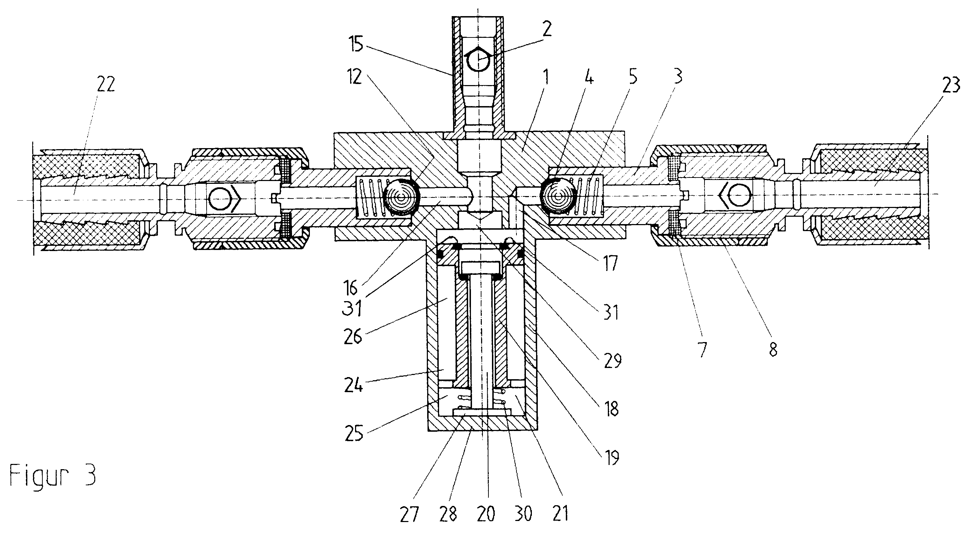

Figur 3 zeigt ein zweites, besonders bevorzugtes Ausführungsbeispiel der Schnellbefüllungs- und Druckausgleichseinrichtung. Das Beispiel ist für Zwillingsreifen ausgelegt, kann aber ohne weiteres auch für Radsätze mit mehr als zwei Reifen verändert werden.

Der obere Teil in Figur 3 entspricht im wesentlichen der in Figur 1 dargestellten Einrichtung. Allerdings ist nur der rechte, zum Innenreifen führende Anschluß 22 mit seinem füllseitigen Druckraum 16 unmittelbar mit dem Einlaß 2 verbunden. Der linke, zum Außenreifen führende Anschluß 23 ist mit seinem füllseitigen Druckraum 17 an den Innenraum eines Zylinders 18 angeschlossen, das mit dem Einlaß 2 in Verbindung steht.

Ein Kolben 19 teilt den Innenraum des Zylinders 18 in eine Ausgleichskammer 29, die mit den füllseitigen Druckräumen 16, 17 in Verbindung steht, und in einen Vergleichsdruckraum 21 auf. Über Ausnehmungen 24 des Kolbens 19 stehen die Teilräume 25 und 26 des Vergleichsdruckraums miteinander in Verbindung. Ein weiteres Ventil 20, nämlich ein federbelastetes Rückschlagventil, ist in einer zentralen Bohrung des Kolbens 19 eingeschraubt. Es öffnet und stellt damit eine Verbindung zwischen dem Vergleichsdruckraum 21 und den füllseitigen Druckräumen 16, 17 her, wenn der Kolben 19 den Kopf 27 des Ventilglieds gegen den Boden 28 des Zylinders 18 drückt oder wenn im Vergleichsdruckraum ein bestimmter Überdruck gegenüber den füllseitigen Druckräumen 16, 17 herrscht.

Bei der Befüllung wird wie folgt vorgegangen. Der Fülldruck schiebt den Kolben 19 nach unten. Das weitere Ventil 20 öffnet, und es findet ein Druckausgleich zwischen der Ausgleichskammer 29 und dem Vergleichsdruckraum 21 statt. Die Federkraft der Ventilfeder 30 schiebt nun den Kolben 19 in die entgegengesetzte Richtung und schließt das Ventil 20.

Bei einem durch die Größe des Hubvolumens vorgegebenen Druckabfall in einem der beiden angeschlossenen Reifen, bedingt z. B. durch einen Reifenplatzer oder das Öffnen des Zentralventils bei der Luftdruckprüfung, und damit in der Ausgleichskammer 29 und den füllseitigen Druckräumen 16, 17 bewegt der höhere Luftdruck im Vergleichsdruckraum 21 den Kolben 19 in Figur 3 nach oben und unterbricht mit der Dichtung 31 die Verbindung zwischen den Anschlüssen der beiden Reifen. Ein Druckausgleich zwischen den Reifen findet nicht mehr statt. Damit kann bei einem Reifendefekt die Luft aus dem dichten Reifen nicht mehr über den defekten Reifen ausströmen.

Die Differenz zwischen Solldruck und Schließdruck wird durch die Vergrößerung des Vergleichsdruckraums 21 infolge der Kolbenbewegung hervorgerufen. Diese Differenz kann je nach den Anforderungen unterschiedlich festgelegt werden.

Beim Erreichen einer bestimmten Druckdifferenz zwischen dem Vergleichsdruckraum 21 und der der Ausgleichskammer 29, z. B. beim Befüllen oder Nachfüllen der Reifen mit einer externen Druckluftquelle, wird das Kolbenventil 20 geöffnet, und der Vergleichsdruck kann auf folgende Weise neu definiert werden.

Der Druck in der Ausgleichskammer 29 steigt an, und beim Überschreiten der Schließdruckkraft wird die Trennung der füllseitigen Druckräume 16, 17 wieder aufgehoben und der Kolben 19 in die untere Position geschoben. Dadurch öffnet sich das Kolbenventil 19 und der Vergleichsdruck wird neu definiert.

Vorzugsweise wird der Innenreifen über den mit dem Zentralventil (Einlaß 2) in direkter Verbindung stehenden Anschluß 22 verbunden. Auf diese Weise ist bei abgesperrtem Anschluß 23 ein Messen des Luftdrucks im Innenreifen über den Einlaß 2 möglich. Der Luftdruck des Außenreifens läßt sich über das leicht zu erreichende, unmittelbar am Reifen sitzende Ventil problemlos messen, indem die Schlauchverbindung zum Außenreifen abgenommen wird. Welcher Reifen defekt ist, kann so leicht erkannt werden.

Durch das Verhältnis zwischen Vergleichsdruckraum, Kolbenhub und Reibung kann das Verhältnis zwischen Soll- und Schließdruck eingestellt werden. Dazu kann ein veränderlicher Boden 28 zur Veränderung des Volumens des Vergleichsdruckraums 21 vorgesehen sein.

### Bezugszeichenliste

- 1: Gehäuse
- 2: Reifenbefüllventil, Einlaß
- 3: Auslaß
- 4: Ventilkugel, Verschlußteil
- 5: Druckfeder
- 6: Hülse
- 7: Ringdichtung
- 8: Gewinde
- 9, 10, 11: Schulter
- 12: Ventilsitzfläche
- 13: Erhebung
- 14: Druckkammer, Ausgleichsbohrung
- 15: Außengewinde
- 16: füllseitiger Druckraum für den Innenreifen
- 17: füllseitiger Druckraum für den Außenreifen
- 18: Zylinder
- 19: Kolben
- 20: weiteres Ventil
- 21: Vergleichsdruckraum
- 22: Anschluß für den Innenreifen
- 23: Anschluß für den Außenreifen
- 24: Ausnehmungen
- 25: Teilraum
- 26: Teilraum
- 27: Kopf des Ventilglieds
- 28: Boden
- 29: Ausgleichskammer (entspricht Druckkammer 14)
- 30: Ventilfeder
- 31: Dichtung

## Patentansprüche

1. Einrichtung zum Überwachen und Ausgleichen des Drucks in mehreren Druckräumen, insbesondere in den Luftreifen eines aus mehreren Reifen bestehenden Radsatzes von Landfahrzeugen, mit einem Gehäuse (1), einer Druckkammer (14), die mit einer der Anzahl der Druckräume entsprechenden Anzahl von Auslässen (3) verbunden ist, und mindestens einem zwischen den Auslässen (3) und der Druckkammer (14) angeordneten und vom in den Druckräumen herrschenden Druck betätigbaren Ventil (4,11),
**dadurch gekennzeichnet**,
daß vor jedem Auslaß (3) ein Ventil (4,11) angeordnet ist, dessen Verschlußteil (4) bei einem Druckabfall in dem jeweiligen Druckraum gegenüber dem Druck in der Druckkammer (14) öffnet, und zusätzlich mindestens ein Kanal zwischen jedem Auslaß (3) und der Druckkammer (14) vorgesehen ist, wobei die Querschnittsfläche des Kanals bzw. der Kanäle so bemessen ist, daß bei geschlossenem Ventil (4,11) der Druckausgleich über den Kanal mindestens 10 mal, insbesondere mindestens 50 mal, langsamer als durch das geöffnete Ventil (4,11) erfolgt.

2. Einrichtung nach Anspruch 1,
**gekennzeichnet durch**
einen absperrbaren, mit der Druckkammer (14) verbundenen Einlaß (2) für das Druckmedium, insbesondere Druckluft.

3. Einrichtung nach Anspruch 1 oder 2,
**dadurch gekennzeichnet**,
daß der Kanal zwischen der Ventilsitzfläche (12) und dem an dieser Fläche anliegenden Verschlußteil (4) gebildet wird.

4. Einrichtung nach einem der Ansprüche 1 bis 3,
**dadurch gekennzeichnet**,
daß das Ventil als eine auf einer ebenen Schulter aufliegenden Membran ausgebildet ist, wobei die Schulter eine geringfügige Erhebung oder Vertiefung hat.

5. Einrichtung nach einem der Ansprüche 1 bis 3,
**dadurch gekennzeichnet**,
daß das Ventil ein, insbesondere federbelastetes, Kugelventil (4,11) ist und eine von der konischen Form geringfügig abweichende und damit den Kanal bzw. die Kanäle bildende Ventilsitzfläche (12) hat.

6. Einrichtung nach einem der Ansprüche 1 bis 5,
**dadurch gekennzeichnet**,
daß die Druckkammer (14) einen füllseitigen Druckraum (16) für den Innenreifen und einen füllseitigen Druckraum (17) für den Außenreifen aufweist und daß ein Zylinder (18) mit einem Kolben (19) vorgesehen ist, der den füllseitigen Druckraum (16) für den Innenreifen vom füllseitigen Druckraum (17) für den Außenreifen bei einem vorgegebenen Druckverlust im Innenreifen und/oder Außenreifen absperrt.

7. Einrichtung nach Anspruch 6,
**dadurch gekennzeichnet**,
daß die füllseitigen Druckräume (16, 17), insbesondere über ein im Kolben (19) angeordnetes weiteres Ventil (20), mit einem Vergleichsdruckraum(21) verbunden sind, wenn der Druck im Einlaß (2) größer als im Vergleichsdruckraum (21) ist, und daß die eine Fläche des Kolbens (19) vom Druck in dem füllseitigen Druckräumen (16, 17) und die andere Fläche des Kolbens (19) vom Druck im Vergleichsdruckraum (21) beaufschlagt wird.

8. Einrichtung nach Anspruch 7,
**dadurch gekennzeichnet**,
daß das weitere Ventil (20) als Rückschlagventil ausgebildet ist und eine derartige Schließkraft hat, daß es bei einem bestimmten Druckabfall in den füllseitigen Druckräumen (16, 17) gegenüber dem Vergleichsdruckraum (21) öffnet, wobei der genannte Druckabfall wesentlich höher als der zum Bewegen des Kolbens (19) erforderliche Druckabfall ist.

9. Einrichtung nach einem der Ansprüche 6 bis 8,
**gekennzeichnet durch**
einen vom Kolben (19) in seiner Absperrstellung betätigbaren Schalter für ein Anzeigeelement.

10. Verfahren zum Herstellen der Einrichtung nach einem der Ansprüche 3 bis 9, wobei die Ventilsitzfläche (12) mindestens eine zusätzliche Erhebung (13) und/oder Vertiefung aufweist,
**dadurch gekennzeichnet**,
daß man sowohl die Ventilsitzfläche (12) als auch die darin vorgesehenen Erhebungen (13) bzw. Vertiefungen in einem Arbeitsgang durch Eindrücken eines entsprechenden Formwerkzeugs in eine Stufenbohrung im Gehäuse (1) herstellt.
